Europäisches Patentamt

European Patent Office

Office européen des brevets

(11) Veröffentlichungsnummer: **0 104 533 B1**

(12) **EUROPÄISCHE PATENTSCHRIFT**

(45) Veröffentlichungstag der Patentschrift: **03.06.92**

(21) Anmeldenummer: **83108994.1**

(22) Anmeldetag: **12.09.83**

(51) Int. Cl.⁵: **F16B 12/46**, F16B 12/00

(54) **Vorrichtung zum vorzugsweise lösbaren Verbinden von Bauelementen.**

(30) Priorität: **11.09.82 DE 3233745**

(43) Veröffentlichungstag der Anmeldung:
**04.04.84 Patentblatt 84/14**

(45) Bekanntmachung des Hinweises auf die
Patenterteilung:
**03.06.92 Patentblatt 92/23**

(84) Benannte Vertragsstaaten:
**AT BE CH DE FR GB IT LI LU NL SE**

(56) Entgegenhaltungen:

| | |
|---|---|
| AT-B- 284 380 | CH-A- 624 738 |
| DE-A- 2 803 056 | DE-A- 3 100 859 |
| DE-B- 1 162 983 | DE-B- 2 611 754 |
| DE-U- 1 662 221 | FR-A- 1 548 527 |
| US-A- 1 511 273 | US-A- 2 214 939 |
| US-A- 2 546 312 | US-A- 4 203 193 |

(73) Patentinhaber: **Meier, Hannelore**
**Tiergarten 8**
**W-7860 Schopfheim-Gersbach(DE)**

(72) Erfinder: **WANGLER, Alfred**
**Lettenweg 3**
**W-7889 Grenzach-Wyhlen 2(DE)**

EP 0 104 533 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Verbindungsvorrichtung nach dem Oberbegriff des Anspruchs 1. Solche Vorrichtungen dienen u.a. zur Verbindung von in grösserer Anzahl flächenhaft oder raumgitterartig verteilt angeordneten Bauelementen, wobei sich vielfältige Formgestaltungen ergeben.

Eine Verbindungsvorrichtung der eingangs genannten Art ist bekannt aus der US-A-4203193. Dort ist zwar eine aufspreizende Kraftübertragung zwischen einem ersten und zweiten Element der Vorrichtung vorgesehen, jedoch keine Kraftübertragung in der Weise, dass eine formschlüssige Verbindung zwischen den genannten Vorrichtungselementen hergestellt würde. Eine vergleichsweise hoch belastbare, dabei aber zuverlässige und überdies lösbare Formschlussverbindung lässt sich damit nicht herstellen.

Eine andersartige Verbindungsvorrichtung ist bekannt aus der DE-B-2611754. Sie ermöglicht die Herstellung einer formschlüssigen Rastverbindung mittels von an Federarmen befindlichen Rastvorsprüngen und entsprechenden Hinterschneidungen im Gegenstück. Eine Sicherung der somit in Richtung quer zu den Federarmen nachgiebigen Rastvorsprünge gegen Ausrasten ist nicht vorgesehen. Eine Zugbeanspruchung der Verbindung in Richtung entgegen der Einrastbewegung hat an den Federarmen wirkende Biegemomente zur Folge, die auf eine Trennung der Rastvorsprünge von ihren Hinterschneidungen, d.h. auf ein Ausrasten und Versagen unter erhöhten Belastungen, hinwirken. Diese bekannte Rastverbindung erlaubt übrigens kein Lösen durch handhabbare Mittel für ein Ausrasten mit anschliessendem Ausziehen entgegen der Einrastbewegung, sondern nur ein seitliches Ausrücken der Rastelemente, wofür je nach Einbauverhältnissen gegebenenfalls kein Platz vorhanden ist. Die Verbindung ist daher im eigentlichen Sinne nicht lösbar.

Aufgabe der Erfindung ist daher die Schaffung einer Verbindungsvorrichtung, die bei weitgehender Unabhängigkeit von erhöhter Belastung und Verschleiss der Rastelemente eine bequem und wiederholt lösbare, im geschlossenen Zustand sichere Formschlussverbindung herzustellen ermöglicht. Die erfindungsgemässe Lösung dieser Aufgabe ist bestimmt durch die Merkmale der jeweils selbständigen Patentansprüche.

Bei diesen Lösungsmerkmalen ist grundsätzlich zwischen der Verankerung jeweils eines Verbindungselementes in einem zugehörigen Bauelement einerseits und die - insbesondere lösbare - Verbindung dieses Verbindungselementes mit einem anderen Bauelement oder mit einem Uebergangs-Verbindungselement zu einem anderen Bauelement andererseits zu unterscheiden.

Die Verankerung kann mit gewissen Lösungsmerkmalen gemäss der Erfindung besonders einfach und vorteilhaft durch Einpressen von Verankerungselementen in nachgiebige oder insbesonders belibend verformbare Bauelementabschnitte unter Bildung von Hinterschneidungen an Ort und Stelle erreicht werden. Solche Ausführungen eignen sich vor allem für Bauelemente aus Holz, Weichkunststoffen und dergl.. Andere Lösungsvarianten arbeiten mit vorgeformten Hinterschneidungen, an denen die Verankerung durch formschlüssiges Einrasten oder Einschieben Hergestellt wird. Diese Ausführungen erlauben vielfältige Verbindungen z.B. an Bauelementen aus Metall, Hartkunststoffen, Keramik, Beton, Glas und dergl..

Die insbesondere lösbare Verbindung der Bauelemente miteinander unter Vermittlung durch ein Verbindungselement oder eine Paarung von Verbindungselementen, deren eines als Zwischenglied ausgebildet ist, kann bei den erfindungsgemässen Lösungsvarianten im allgemeinen mit Hilfe von Rastvorrichtungen erreicht werden, die sich durch rasches und leichtes Schliessen sowie Oeffnen auszeichnen. Damit ergeben sich wesentliche Vorteile für die Bildung von an den jeweiligen Verwendungszweck optimal angepassten Vielfachstrukturen von technischen oder dekorativen Bauelementen, die mit einer Mehrzahl von benachbarten Bauelementen in Form eines Flächen- oder Raumgitters oder in anderer Raster- oder Musterform verbunden sind. Die Gleichartigkeit der Verbindungsvorrichtungen an den verschiedenen Anschlussstellen der Bauelemente miteinander ergibt dabei eine hohe Universalität und Variabilität, während die Lösbarkeit der Rastverbindung oder einschiebbaren Formschlussverbindung Anpassungen an veränderte Funktionsanforderungen oder wechselnde dekorative Zwecke ermöglicht. Solche Anwendungen finden sich z.B. im Ausstattungs- und Ausstellungswesen in vielfältiger Form.

Weitere wesentliche Anwendungen für die erfimdungsgemässe Vorrichtung ergeben sich bei der Verbindung von Bauelementen für Zwecke der Raumunterteilung sowie für Verkleidungszwecke, z.B. für Heizkörperverkleidungen, Wand- und Dekkenverkleidungen. Weiterhin ist der Einsatz für die Verbindung von Bauteilen zu erwähnen, wobei es auf die technischen Funktionen der Tragfähigkeit, der leichten Verankerung und gegebenenfalls der leichten Lösbarkeit ankommt oder neben der ästhetisch-dekorativen Funktion ankommen kann. Hier sei z.B. auf das Verbinden von Möbelbestandteilen, aber auch von grösseren Bauelementen wie Lampen-, Garderoben-, Regalbestandteilen und dergl. hingewiesen. Die Einsatzmöglichkeiten erstrecken sich dabei gleichermassen auf den Innen- und Aussenbereich von Gebäuden wie auch auf den Tiefbau. Mit Verbindungsvorrichtungen der erfindungsgemässen Art lassen sich z.B. Treppen- und Balkonverzierungen aus entsprechend gestalteten Bauelementen ebenso zusammensetzen wie etwa Vorgartenzäune und andere Einfriedungen. Dabei kommt es vielfach neben der Lösbarkeit der Verbindung oder anstelle derselben auf die Möglichkeit der elastischen oder plastischen Verformung, insbesondere Biege- und/oder Torsionsverformung der Verbindungselemente an, ohne die Verankerungssicherheit und gegebenenfalls die Lösbarkeit zu beeinträchtigen. Solche kombinierten Anforderungen lassen sich mit den erfindungsgemässen Lösungsmerkmalen ebenfalls vorteilhaft erfüllen. Hinsichtlich des Materials der Bauelemente, in denen Verbindungsvorrichtungen der erfindungsgemässen Art u.a. verankert werden können, ist für Beton insbesondere auf das Anwendungsbeispiel der Einfriedungselemente und für Keramik sowie Glas auf dasjenige der z.B. plattenartigen, gegebenenfalls transparenten Dekor- bzw. Verkleidungselemente hinzuweisen.

Allgemein versteht es sich, dass der begriff "Bauelement" im vorliegenden Zusammenhang keiner Einschränkung hinsichtlich der Grösse oder des Aufbaues, insbesondere der Einfachheit oder Kompliziertheit, dieser Elemente unterliegt. Diese können vielmehr selbst zusammengesetzte und für sich funktionsfähige Baueinheiten oder sonstige Gebilde sein, die nur innerhalb der Zusammensetzung mit Vorrichtungen der erfindungsgemässen Art die Funktion von "Bauelementen" haben.

Die Erfindung wird weiter unter Bezugnahme auf die in den Zeichnungen dargestellten Ausführungsbeispiele erläutert.

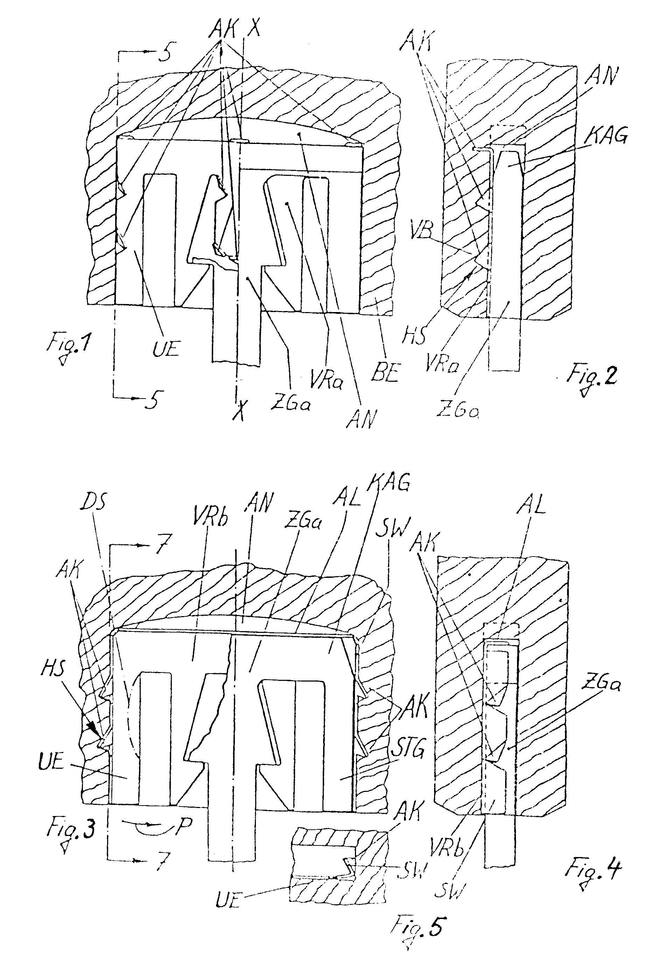

Bei der Ausführung nach Fig.1 und 2 ist in eine schlitzartige Bauelementausnehmung AN ein lamellenartiges, aus federndem Flachmaterial bestehendes Verbindungselement VRa sowie ein aus stärkerem Flachmaterial bestehendes, hammerartiges Zwischenglied ZGa eingesetzt.

Das Verbindungselement VRa ist in der aus Fig.1 ersichtlichen Weise als Mehrfach-Gabelkörper ausgebildet und liegt in der Verankerungsstellung gemäss Fig.2 flächig an einer Seitenwandfläche der Ausnehmung AN. Die äusseren Gabelschenkel des Verbindungselementes VRa sind als seitliche Uebergangselemente UE zu zackenartigen, aus dem Flachmaterial des Verbindungselementes abgewinkelten Ankerelementen AK ausgebildet. Weitere zackenartige Ankerelemente sind in entsprechender Weise an der hinteren Querkante und an der Umfangskante eines mittleren, ebenfalls gabelarmförmig in Richtung vom Grund der Ausnehmung zu deren Oeffnung hin vorspringenden Uebergangsabschnitts des Verbindungselementes VRa gebildet.

Wie Fig.2 - eine Schnittansicht gemäss Linie 5-5 in Fig.1 - in Seitenansicht zeigt, haben sich die Ankerelemente AK in ihrer Verankerungsstellung in den verformbaren Seitenwandbereich VB der Bauelementausnehmung AN unter Bildung entsprechender Hinterschneidungen HS eingedrückt, womit eine sichere und tragfähige Verankerung erreicht ist. Dieses Eindrücken der Ankerelemente AK erfolgt beim erstmaligen Einschieben des Zwischengliedes ZGa in die Ausnehmung AN und wird durch die aus Fig.2 ersichtliche Gestaltung der rückwärtigen Querkante des Zwischengliedes als keilförmiges Antriebsglied KAG wesentlich erleichtert. Diese Ausführung zeichnet sich aus durch einfache Herstellbarkeit des lamellenartigen Verbindungselementes als Stanzteil sowie durch einfache Handhabung bei der Verankerung.

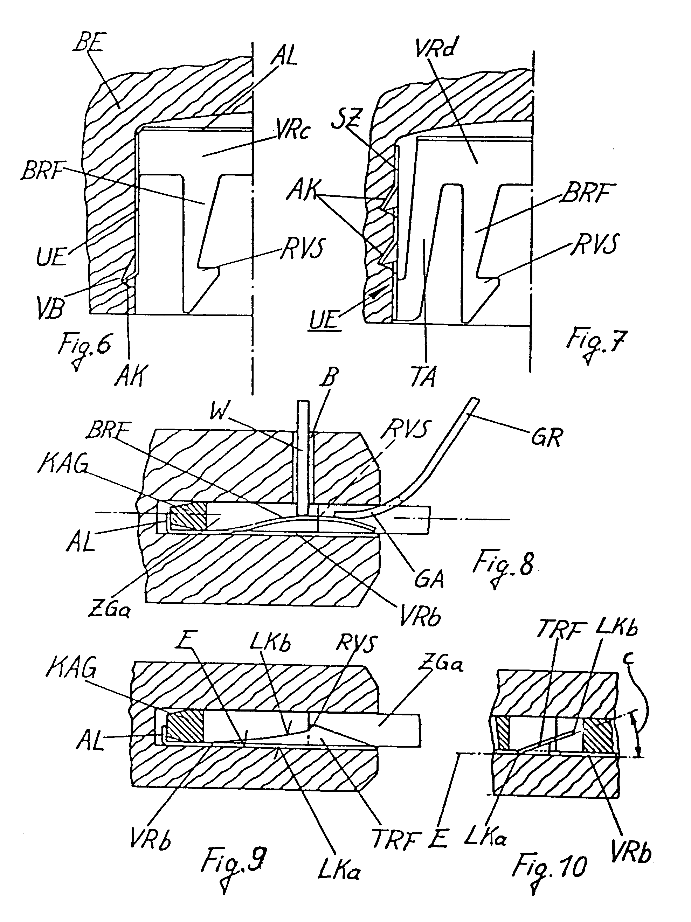

Fig.3 und Figuren 4 bzw. 5 - letztere beiden ein Teil-Querschnitt aus Fig.3 bzw. ein Längsschnitt gemäss Linie 7-7 in Fig.3 - zeigen eine Verbindungsvorrichtung ähnlich derjenigen nach Fig. 1 und 2, wobei jedoch an den äusseren Längskanten der gabelförmigen Uebergangselemente UE quer zur Lamellen- bzw. Schlitzebene abgewinkelte Seitenwandabschnitte SW des Verbindungselementes VRb sowie an der rückwärtigen Querkante des letzteren eine ebensolche Anschlagleiste AL vorgesehen sind.

Das Zwischenglied ZGa - van gleicher Umfangsform wie bei der Ausführung nach Fig.1 und 2 - wird in den somit von der Lamelle mit ihren abgewinkelten Abschnitten gebildeten, dachartigen Innenraum eingeschoben. Dabei bewirken gabelförmige Stützgliedabschnitte STG des Zwischengliedes ZGa ein Einpressen der an den Aussenseiten der Seitenwandabschnitte SW nach aussen abgewinkelten Ankerelemente AK in die verformbaren Wandbereiche an den seitlichen Stirnflächen der Ausnehmung AN. Damit bilden sich entsprechende Hinterschneidungen HS. Die rückwärtigen Seitenkantenabschnitte des Zwischengliedes ZGa sind zu diesem Zweck als keilförmiges Antriebsglied AG ausgebildet.

Beim Einführen des Verbindungselementes VRb in die Ausnehmung AN werden die Uebergangsabschnitte UE in der aus Fig.5 ersichtlichen Weise tordiert und ausserdem gemäss Pfeil P in Fig.3 seitlich elastisch nach innen verbogen, so dass die Spitzen der zackenförmigen Ankerelemente AK unter Druckvorspannung an den zugehörigen Wandflächenabschnitten der Ausnehmung AN liegen. Die seitliche Biegung der Uebergangsabschnitte UE kann noch durch Einschnürungen oder Dünnstellen DS erleichtert werden. Bereits beim Einsetzen des Verbindungselementes VRb in die Ausnehmung AN wird daher eine Lagesicherung erreicht. Beim anschliessenden Einpressen ist daher die endgültige Lage der Ankerelemente sicher vorbestimmt.

Die Einschubbewegung des Zwischengliedes ZGa in die Ausnehmung wird durch die als Blechauskleidung wirkende Gestaltung des Verbindungselementes VRb erleichtert. Ferner ergibt sich eine spielärmere Lagerung des Zwischengliedes ZGa in der Ausnehmung und insbesondere eine sichere Anschlagbegrenzung der Einschubbewegung bzw. der Tiefenstellung infolge der Anschlagleiste AL unabhängig von der im allgemeinen mit grösseren Masstoleranzen behafteten Ausnehmungstiefe.

Bei den Ausführungen nach Fig.6 und 7 sind weitere Varianten der Anordnung der Ankerelemente AK an lamellenartigen Verbindungselementen VRc bzw. VRd vorgesehen. Gemäss Fig.6 ist ein Ankerelement am Endabschnitt eines aus der Flachmaterialebene (nach Art des Seitenwandabschnitts SW in Fig.3 und 4 abgewinkelten Uebergangsabschnitts UE angeformt und wird wiederum in den verformbaren, seitlichen Wandabschnitt VB der Ausnehmung AN beim Einschieben des Zwischengliedes ZGa eingepresst. Der Vorteil dieser Ausführungs ist der Fortfall des parallel zur Flachmaterialebene verlaufenden Profilabschnitts des Uebergangselementes UE, was eine wesentlich einfachere Herstellung und ein leichteres Verbiegen dieses Uebergangselementes beim Einsetzen in die Ausnehmung AN unter elastischer Vorspannungsanpressung des Ankerelementes gegen die Ausnehmungswand ermöglicht. Entsprechendes gilt auch für die Ausführung nach Fig.7, bei der jedoch ein auf Zug beanspruchter und daher nicht knickgefährdeter Seitenarm SZ in Verbindung mit einem stärker bemessenen, nicht notwendigerweise zu verformenden Tragabschnitt TA vorgesehen ist.

Die Ausführungen nach Fig.1 bis 7 können mit im wesentlichen dem gleichen Zwischenglied als Verbindungselement verwendet werden, wobei im Seitenwandbereich als Stützglieder wirkende Abschnitte des Zwischengliedes nicht nur für das Einpressen, sondern auch für die Halterung der Ankerelemente in ihren Hinterschneidungen sorgen. Dise Hinterschneidungen können im übrigen durchweg auch vorgeformt werden, so dass nur ein Einrasten oder Einschieben der Ankerelemente erforderlich ist. Weiter können die Verbindungselemente der vorliegenden oder sonstigen Art im allgemeinen auch durch Kleben in den zugehörigen Bauelementen verankert werden.

Der Formschluss zwischen Verbindungselement VRa bis VRd einerseits und Zwischenglied ZGa andererseits wird in der aus den Figuren 3 bis 10 ersichtlichen Weise mittels Biege- bzw. Torsions-Rastfederelementen BRF bzw. TRF der betreffenden Verbindungselemente erreicht, die mit entsprechenden Rastvorsprüngen RVS an zugeordneten Haltevorsprüngen des Zwischengliedes angreifen. Die Biege-Rastfederelemente weisen im unverformten Ausgangszustand eine wenigstens abschnittsweise mit dem gleichen Radius gekrümmte Form auf, wodurch sich eine mehr oder weniger gleichmässige Ausnutzung der verfügbaren Federarmlänge für die Rastfeder im Sinne eines möglichst grossen elastischen Federhubes ergibt.

Bei einem Torsions-Rastfederelement werden gemäss Figuren 9 und 10 mit besonderem Vorteil die in den Ansprüchen 8 bis 10 ausführlich gekennzeichneten Gestaltungsmerkmale angewendet, wobei die angegebene Form der Federarm-Längskanten LKa und LKb in Bezug auf die Ausnehmungs-Grundebene E unter Berücksichtigung des Torsionswinkels c eine sichere Rastwirkung mit hohem Ausnutzungsgrad des federnden Materials ergeben.

Das Losen dieser Rastverbindungen kann mittels Hilfswerkzeugen erfolgen, beispielsweise einem Stiftwerkzeug W nach Fig.8 das eine Bohrung B eines Bauelementes durchgreift. Ohne solche Ausnehmungen kommt ein gabelförmiges Werkzeug mit Griffabschnitt GR und Gabelabschnitt GA gemäss Fig.8 aus, das in die Oeffnung der Bauelementausnehmung eingeführt wird.

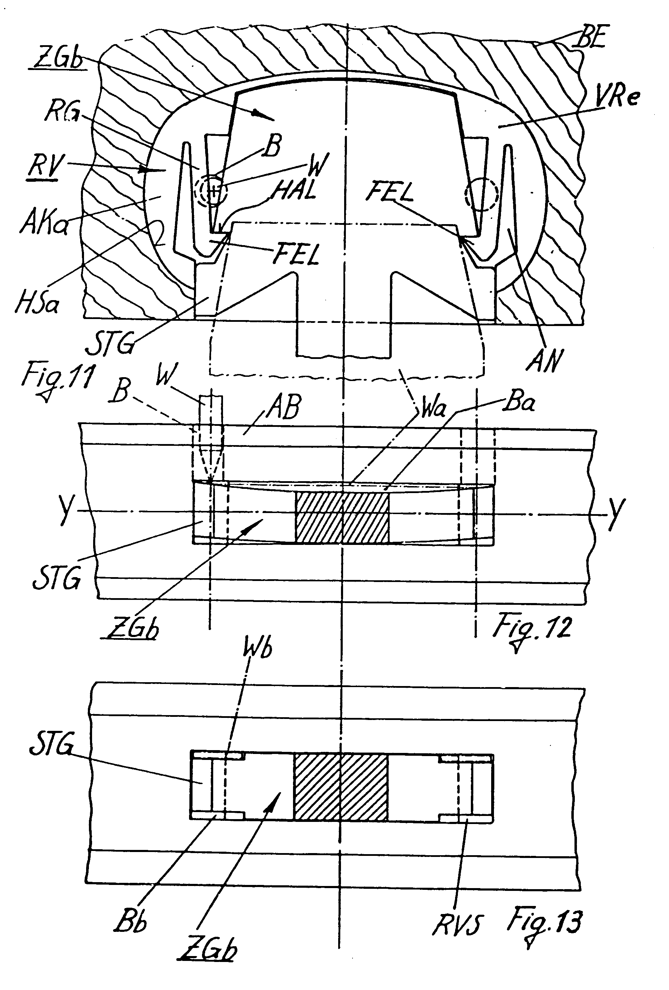

Bei den Ausführungen nach Figuren 11 bis 13 sind Rastvorrichtungen RV vorgesehen, die mit in Richtung parallel zur Ausnehmungslängsrichtung YY federnden Rastgliedern RG sowie zugehörigen Formschlusselementen FEL arbeiten. Letztere greifen an zugeordneten Halterungsanlagen HAL eines entsprechenden Zwischengliedes ZGb an, dessen Schultern als Stützglieder STG für ebenfalls parallel zur Ausnehmungslängsrichtung YY nachgiebige Rast-Ankerelemente AKa wirken und diese in vorgeformten, seitlichen Hinterschneidungen HSa halten. Auch hier kann zum Lösen der Rastverbindung ein Stiftwerkzeug W verwendet werden, das eine Bohrung B in einer Abdeckung AB des Bauelementes durchgreift. Gegebenenfalls kann auch eine leicht gekrümmte Form des Zwischengliedes ZGb gemäss Fig.12 den Einsatz eines einfachen, keilartig wirkenden Schubwerkzeugs Wa ermöglichen, während gemäss Fig.13 besondere Asnehmungen Bb anstelle von durch Krümmung gebildeten Oeffnungen Ba für den Eingriff von gabelartigen Lösewerkzeugen Wb vorgesehen sind.

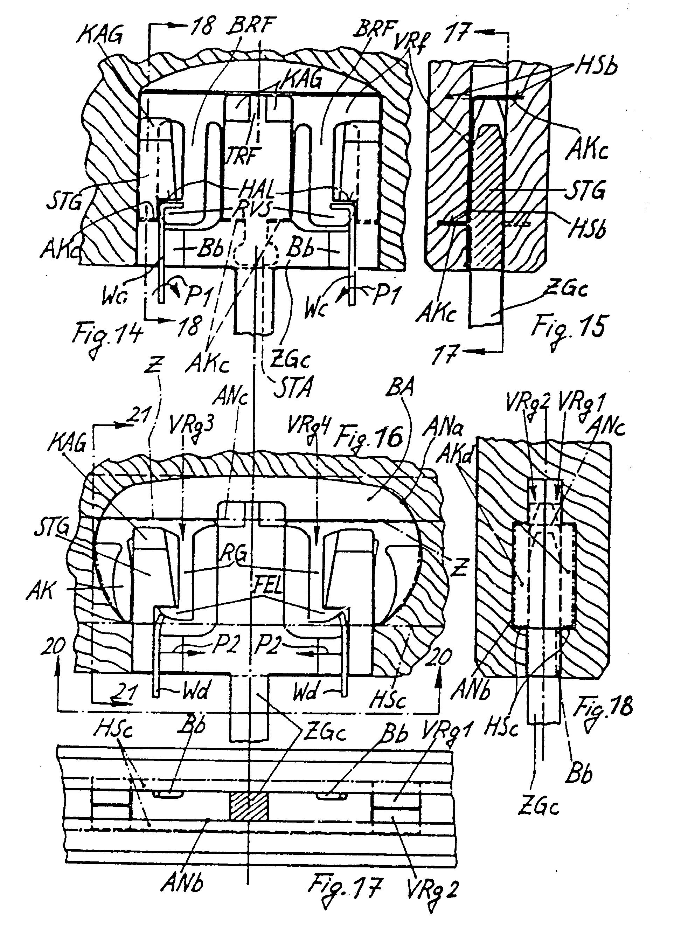

Bei den Ausführungen nach Figuren 14 bis 18 wird für unterschiedliche Formen von Bauelementausnehmungen und entsprechend unterschiedliche Verankerungs-Verbindungselemente stets ein und dasselbe Zwischenglied-Verbindungselement ZGc verwendet, welches wiederum gabelartig ausgebildet ist und beiderseitige, gabelarmförmige Stützglieder STG sowie ein (nicht näher bezeichnetes) mittleres, stärker dimensioniertes Tragglied mit Tragfläche TR zur Abstützung quer zur Ebene der schlitzförmigen Bauelementausnehmung, d.h. gegen entsprechende Biegemomente, aufweist.

Bei der Ausführung nach Fig.14 und 15 - letztere ein Schnitt gemäss Linie 18-18 in Fig.14 - ist wie bei den vorangehenden Ausführungen eine dem Zwischenglied nach Dicke und Breite angepasste Bauelementausnehmung vorgesehen. Hierin eingesetzt ist ein lamellenartiges Verbindungselement VRf mit Biegefeder-Rastelementen BRF und zugehörigen Rastvorsprüngen RVS, die an hier nach oben gerichteten Halterungsanlagen HAL angreifen und zum Einrasten in Richtung quer zur Schlitzebene ausfedern. Zum Lösen der Rastverbindung dienen haken- oder schlüsselartige Werkzeugelemente Wc, die an ihren Schaftabschnitten gemäss Pfeilen P1 verdreht werden. Dabei drücken die vorderen, abgewinkelten Werkzeugabschnitte die Rastvorsprünge RVS unter elastischer Biegeverformung in die Lamellenebene des Verbindungselementes VRf zurück, so dass sie die Halterungsanlagen HAL und damit das Zwischenglied ZGc zum Herausziehen aus der Bauelementausnehmung freigeben. Hierzu werden die Werkzeugelemente Wc in eingeprägte Frontausnehmungen Bb des Zwischengliedes eingeführt. Die beiden Werkzeugelemente Wc können übrigens durch einen nicht dargestellten, äusseren Bügelabschnitt, der vorzugsweise quer zur Lamellen- bzw. Schlitzebene abgewinkelt ist, zu einem Werkzeug vereint werden, wobei der entsprechend biegeverformbare Bügelabschnitt durch Zusammendrücken seiner Bügelschenkel parallel zur Schlitzebene eine gleichzeitige Verdrehung der abgewinkelten Werkzeugabschnitte in Löserichtung ermöglicht.

Sowohl an den äussersten Gabelarmabschnitten wie auch am mittleren Gabelarmabschnitt des Verbindungselementes VRf sind in der aus Fig.15 ersichtlichen Weise zacken- oder schneidenförmige Ankerelemente AKc gebildet. Diese Ankerelemente werden beim Einschieben des Zwischengliedes ZGc mit Hilfe von keilartigen Antriebselementen KGA unter Bildung von tragenden Hinterschneidungen in das nachgiebige Material des Bauelementes eingepresst.

Uebrigens kann diese Ausführung mit besonderem Vorteil auch für seitlich durchgehende, also dem Zwischenglied in der Breite nicht angepasste Schlitzausnehmungen im Bauelement verwendet werden, wenn in diesen durchgehenden Schlitz, wie in Fig.15 angedeutet, vorgeformte, ihrerseits ebenfalls schlitzartige und seitlich durchgehende Hinterschneidungen HSb für die Aufnahme der Ankerelemente AKc eingebracht werden. Solche dünnen Schlitze lassen sich mit an sich üblichen Räum-, Zieh- oder Stosswerkzeugen bzw. entsprechenden Werkzeugmaschinen leicht herstellen. Im Beispiel sind die Hinterschneidungen HSb in symmetrischer Anordnung an beiden Schlitzseitenwänden vorgesehen, so dass das Verbindungselement VRf in beiden möglichen Orientierungen in die Bauelementausnehmung eingeschoben werden kann. Im übrigen ist auch die rückwärtige Anschlagleiste der Ausführung nach Fig.15, wie sie nur für durchgehende Schlitzausnehmungen in Betracht kommt, in ihrer Höhe (quer zur Lamellen- bzw. Schlitzebene) so vergrössert, dass sie als zusätzliches Ankerelement AKc in eine zugehörige Schlitzhinterschneidung eingreifen kann.

Bei manchen Anwendungen kommt es auf eine spielarme Halterung und Abstützung des Zwischengliedes in der Bauelementausnehmung gegen von aussen eingeleitete, quer zur Schlitzebene wirkende Biegemomente an. Hierfür ist nach Fig.14 am mittleren Gabelarmabschnitt des Verbindungselementes VRf ein bis zum Rand der Ausnehmungsöffnung vorstehender Stützabschnitt STA des Lamellen-Flachmaterials angeformt. In Verbindung mit der maximal in Tiefenrichtung der Ausnehmung eingreifenden Tragfläche TR, die sich auf einer Seite gegen das Lamellen-Flachmaterial und auf der anderen Seite gegen eine Ausnehmungsseitenfläche abstützt, ergibt sich somit der grösstmögliche Hebelarm für die spielarme Biegeabstützung des Verbindungselementes.

Die Ausführung nach Fig.16 bis 18 ist zunächst für den Einsatz in den mit seitlichen, vorgeformten Hinterschneidungen nach Art von Fig. 11 versehenen Bauelementausnehmungen ANa vorgesehen, und zwar mit einem futterartigen Verankerungs-Verbindungselement VRg sowie mit dem gleichen Zwischenglied ZGc wie nach Fig.14. Im Unterschied zu der Ausführungs nach Fig.11 ist das Verbindungselement VRg jedoch mit als Schwenk-Stützhebel ausgebildeten Ankerelementen AKd versehen, die von den Stützglied-Gabelarmabschnitten STG des Zwischengliedes ZGc beim Einschieben in die Hinterschneidungen derart eingepresst werden, dass sie sich mit ihren Spitzen kniehebelartig an den äusseren Endabschnitten der Hinterschneidungsoberflächen verkeilen und damit eine besonders sichere Halterung gewährleisten.

Im übrigen ist das Verbindungselement VRg mit parallel zur Schlitzebene federnden Rastgliedern RG versehen, die mit ihren hammerkopfigen Formschlusselementen FEL zum Einrasten an den inneren Vorsprüngen der Stützglieder STG in Richtung von der Ausnehmungsmittelachse nach aussen federn und mittels zangenartig wirkender Lösewerkzeuge Wd gemäss Pfeilen P2 in eine Freigabestellung zum Herausziehen des Zwischengliedes ZGc überführt werden können. Diese Lösewerkzeuge werden wieder in die bereits erwähnten Ausnehmungen Bb des Zwischengliedes eingeführt.

Aus Fig.17 (Schnittansicht gemäss Linie 20-20 in Fig.16) und Fig. 18 (Schnittansicht gemäss Linie 21-21 in Fig.16) geht als weitere, vorteilhafte Besonderheit hervor, dass das Verankerungs-Verbindungselement aus zwei gleich geformten, jedoch antimetrisch zusammengesetzten Teilelementen VRg1 und VRg2 besteht und nicht nur in einem seitlich angepassten Schlitz (Ausnehmung ANa), sondern gleichermassen auch in einem durchgehenden Schlitz ANb mit T-nutartigem Profil und seitlichen, taschenartig durchlaufenden Hinterschneidungen HSc gemäss Fig.18 eingesetzt werden kann. Hierzu ist der Bodenabschnitt BA an beiden Teilelementen VRg1 und VRg2 in seiner Dicke stufenförmig vermindert, während die Teilelemente im Bereich der Rastglieder RG und der Ankerelemente AKd ihre maximale Dicke annehmen, nämlich jeweils die Summe aus der halben Dicke des Bodenabschnitts BA und der Dicke bzw. Seitentiefe einer Hinterschneidung HSc. Infolgedessen greifen die kniehebelartig wirkenden Ankerelemente AKd zeitlich in die Hinterschneidungen HSc ein und verkeilen sich hierin beim Einsetzen des Zwischengliedes. Demgemäss ist auch ohne seitliche Anschläge in der Bauelementausnehmung für eine sichere Arretierung der Verbindungsvorrichtung im durchgehenden Schlitz gesorgt. Gleichwohl kann jedes Teilelement VRg1 bzw. VRg2 für sich in einer Ausnehmung ANa eingesetzt werden und mit einem Zwischenglied ZGc zusammenwirken, wobei lediglich der Bodenbereich der Ausnehmung ANb seitlich nicht ganz ausgefüllt ist.

Aus den Figuren 16 und 18 geht eine weitere vorteilhafte Besonderheit dieser Verbindungsvorrichtung hervor. Wie in Fig.16 durch die strichpunktierten Linien Z angedeutet, kann nämlich das Verankerungs-Verbindungselement VRg auch durch Fortfall des Bodenabschnitts in zwei Teilelemente VRg3 und VRg4 geteilt werden, die unabhängig voneinander in einen durchgehenden, T-nutförmigen Schlitz ANc (in Fig.18 strichpunktiert angedeutet) einschiebbar sind. Die Arretierung dieser Teilelemente erfolgt wieder durch Einschieben eines Zwischenglied-Verbindungselementes mit entsprechenden Gabelarmen bzw. Stützgliedabschnitten STG, welche das Verkeilen der Ankerelemente AKd in den Hinterschneidungen HSc und damit die Lagesicherung der getrennten Teilelemente VRg3 und VRg4 bewirken. Da sich auch die Rastglieder RG mit Ihren Formschlusselementen FEL über die gesamte Dicke bzw. Seitentiefe der Hinterschneidungen HSc erstrecken, ergibt sich für jedes einzelne Teilelement VRg3, VRg4 eine kipp- und verschiebungssichere sowie zugfeste Verbindung im Schlitz. Diese Teilelemente können daher auch völlig unabhängig voneinander für die Bildung von Zugverbindungen an beliebigen Stellen einer durchgehenden Schlitzausnehmung mit je einem passenden Tragelement nach Art eines der Stützglieder STG eingesetzt werden. Dabei werden zweckmässig zur Zugachse symmetrische Formen solcher Zug-Tragelemente angewendet, wobei also an beiden Seiten der Zugachse eine Halterungsanlage HAL sowie auch an der Innenseite des Ankerelementes AKd ein Formschlusselement FEL vorzusehen ist.

Insgesamt ergibt sich so ein äusserst vielseitig einsetzbares und mit vergleichsweise geringem Herstellungsaufwand verbundenes Befestigungs- und Verbindungssystem.

**Patentansprüche**

1. Vorrichtung zum lösbaren Verbinden von Bauelementen, bei der an jeweils einer Verbindungsstelle eines Bauelementes (BE) ein in eine Ausnehmung (AN) des Bauelementes einsetzbares erstes Verbindungselement (VRa - VRf) zur Bildung einer dauerhaften Formschlussverbindung mit dem Bauelement und ein in Wirkverbindung mit dem ersteren in die Ausnehmung (AN) einsetzbares zweites Verbindungselement (ZGa - ZGc) vorgesehen ist, und bei der an dem ersten Verbindungselement mindestens ein Ankerelement (AK) vorgesehen ist, das mit einer Hinterschneidung (HS) des Bauelementes in Formschlussverbindung tritt, wobei an dem zweiten Verbindungselement mindestens ein Stützglied (STG) zur Sicherung des Ankerelementes (AK) in seiner Formschlussverbindung mit dem Bauelement (BE) vorgesehen ist, dadurch gekennzeichnet, dass zwischen den beiden Verbindungselementen (VRa - VRf; ZGa - ZGc) eine selbstsperrende und lösbare Rastfederverbindung (BRF) vorgesehen ist.

2. Verbindungsvorrichtung nach Anspruch 1, dadurch gekennzeichnet, dass innerhalb der Bauelementausnehmung (AN) wenigstens eine vorgeformte Hinterschneidung (HS, HSa) für den Eingriff mindestens eines Ankerelementes (AK, AKa) des ersten Verbindungselementes vorgesehen ist.

3. Verbindungsvorrichtung nach Anspruch 1 oder 2, gekennzeichnet durch wenigstens ein Ankerelement (AK, AKa), das in Brzug auf wenigstens einen Teil des zugehörigen Verbindungselementes (VRa - VRg) im Sinne einer Einrastbewegung in eine zugehörige Hinterschneidung (HS) eines Bauelementes (BE) beweglich angeordnet und mt dem zugehörigen Verbindungselement durch mindestens ein plastisch oder vorzugsweise elastisch verformbares Uebergangselement (UE) verbunden ist.

4. Verbindungsvorrichtung nach Anspruch 3, dadurch gekennzeichnet, dass das Ankerelement (AK, AKa) an einem gegen Biegung und/oder Torsion federelastischen Uebergangselement (UE) des zugehörigen Verbindungselementes angeordnet ist und unter einer in Einrast- bzw. Eindringrichtung bezüglich der zugehörigen Hinterschneidung (HS) wirkenden Federvorspannung steht.

5. Verbindungsvorrichtung nach einem der vorangehenden Ansprüche, gekennzeichnet durch wenigstens ein bügel- oder gabelförmiges erstes Verbindungselement (VRa - VRe) mit mindestens einem wenigstens teilweise plastisch oder elastisch, insbesondere federelastisch, verformbaren Bügel- bzw. Gabelschenkel, der mit mindestens einem Ankerelement (AK, AKa) zum Eindringen oder Einrasten in die zugehörige Hinterschneidung auf der Seite des zugehörigen Bauelementes (BE) versehen ist oder ein solches Ankerelement bildet.

6. Verbindungsvorrichtung nach Anspruch 5, dadurch gekennzeichnet, dass das bügel- oder gabelförmige erste Verbindungselement (VRa - VRe) zum Einsetzen in eine schlitzartige Bauelementausnehmung (AN) ausgebildet und mindestens im Bereich der Aussenkante wenigstens eines der Bügel- bzw. Gabelschenkel mit mindestens einem Ankerelement (AK, AKa) versehen ist.

7. Vorrichtung zum vorzugsweise lösbaren Verbinden von Bauelementen, insbesondere aus Holz oder Kunststoff, mit mindestens einem Paar von komplementären und in einer Einrückstellung formschlüssig zusammenhängenden Verbindungselementen, die ihrerseits mit je mindestens einem der miteinander zu verbindenden Bauelemente in Richtung mindestens einer durch diese Bauelemente verlaufenden Zugachse formschlüssig verbunden sind, insbesondere nach einem der vorangehenden Ansprüche, dadurch gekennzeichnet, dass ein erstes Verbindungselement (VRb) mindestens ein Biege-Rastfederelement (BRF) zur Herstellung einer Formschlussverbindung mit einem komplementären zweiten Verbindungselement (ZGa) in der Einrückstellung aufweist und dass das Biege-Rastfederelement (BRF) im unverformten Ausgangszustand eine wenigstens abschnittsweise mit mindestens annähernd übereinstimmendem Radius gekrümmte Form, vorzugsweise eine abschnittsweise gegensinnig gekrümmte Form, aufweist.

8. Vorrichtung zum vorzugsweise lösbaren Verbinden von Bauelementen, insbesondere aus Holz oder Kunststoff, mit mindestens einem Paar von komplementären und in einer Einrückstellung formschlüssig zusammenhängenden Verbindungselementen, die ihrerseits mit je mindestens einem der miteinander zu verbindenden Bauelemente in Richtung mindestens einer durch diese Bauelemente verlaufenden Zugachse formschlüssig verbunden sind, insbesondere nach einem der vorangehenden Ansprüche, dadurch gekennzeichnet, dass ein erstes Verbindungselement (VRb) mindestens ein Torsions-Rastfederelement (TRF) zur Herstellung einer Formschlussverbindung mit einem komplementären zweiten Verbindungselement (ZGa) in der Einrückstellung aufweist.

9. Verbindungsvorrichtung nach Anspruch 8, dadurch gekennzeichnet, dass das Torsions-Rastfederelement (TRF) als langgestrecktes Flachfederelement mit mindestens einem seitlichen Rastvorsprung (RVS) ausgebildet ist und im unverformten Zustand eine vorgegebene Torsionswinkeldifferenz (c) zwischen dem Flachquerschnitt im Bereich des seitlichen Rastvorsprunges (RVS) einerseits und einem gegen diesen in Federlängsrichtung versetzten Einspannquerschnitt aufweist.

10. Verbindungsvorrichtung nach Anspruch 9, dadurch gekennzeichnet, dass das Torsions-Rastfederelement (TRF) im unverformten Zustand eine wenigstens annähernd in einer Ebene (E) liegende erste Längskante (LKa) aufweist und dass die zweite, den seitlichen Rastvorsprung (RVS) bildende Längskante (LKb) einen sich vom Einspannquerschnitt aus in Richtung zum Rastvorsprung aus der Ebene der ersten Längskante (LKa) erhebenden sowie im Anschluss an den Rastvorsprung (RVS) wieder bis mindestens annähernd in den Bereich der Ebene der ersten Längskante (LKa) zurückfallenden Verlauf aufweist.

11. Vorrichtung zum vorzugsweise lösbaren Verbinden von Bauelementen, insbesondere aus Holz oder Kunststoff, mit mindestens einem Paar von komplementären und in einer Einrückstellung formschlüssig zusammenhängenden Verbindungselementen, die ihrerseits mit je mindestens einem der miteinander zu verbindenden Bauelemente in Richtung mindestens einer durch diese Bauelemente verlaufenden Zugachse formschlüssig verbunden sind, insbesondere nach einem der vorangehenden Ansprüche, dadurch gekennzeichnet, dass an mindestens einem der Verbindungselemente (VRb) ein Anschlagelement (AL) zur Lagesicherung des anderen Verbindungselementes des anderen Verbindungselementes (ZGa), vorzugsweise in Richtung der Zugachse (XX), vorgesehen ist.

12. Vorrichtung zum vorzugsweise lösbaren Verbinden von Bauelementen, insbesondere aus Holz oder Kunststoff, mit mindestens einem Paar von komplementären und in einer Wirkstellung formschlüssig verbundenen Verbindungselementen, die ihrerseits mit je mindestens einem der miteinander zu verbindenden Bauelemente verbunden sind, insbesondere nach einem der vorangehenden Ansprüche, dadurch gekennzeichnet, dass eines der Verbindungselemente (VR) drehbar an dem anderen Verbindungselement (ZC) gelagert und durch mindestens ein Halteglied (HG), vorzugsweise durch mindestens eine verformbare Haltefolie (HF), in Richtung quer zu seiner Drehachse lagegesichert ist.

13. Vorrichtung zum vorzugsweise lösbaren Verbinden von Bauelementen, insbesondere aus Holz oder Kunststoff, mit mindestens einem Paar von komplementären und in einer Einrückstellung formschlüssig zusammenhängenden Verbindungselementen, die ihrerseits mit je mindestens einem der miteinander zu verbindenden Bauelemente durch eine Rastvorrichtung verbunden sind, wobei mindestens eines der Verbindungselemente in eine langgestreckte, insbesondere schlitzförmige Ausnehmung eines der Bauelemente eingesetzt ist, insbesondere nach einem der vorangehenden Ansprüche, vorzugsweise nach Anspruch 12, dadurch gekennzeichnet, dass die Rastvorrichtung (RV) wenigstens ein mindestens annähernd in Richtung parallel zur Ausnehmungslngsrichtung (YY) federndes Rastglied (RG) aufweist und dass an einer in Ausnehmungslängsrichtung (YY) vorspringenden Kante oder Ecke des komplementären Verbindungselementes eine formschlüssige Halterungsanlage (HAL) für ein an dem Rastglied (RG) vorgesehenes Formschlusselement (FEL) gebildet ist.

14. Verbindungsvorrichtung nach einem der vorangehenden Ansprüche, insbesondere nach Anspruch 13, dadurch gekennzeichnet, dass wenigstens eines der zusammenwirkenden Verbindungselemente, vorzugsweise ein in eine Bauelementausnehmung (AN) eingesetztes Verbindungselement, mit dem Bauelement stoffschlüssig, insbesondere durch Klebung, verbunden ist.

15. Verbindungsvorrichtung nach einem der vorangehenden Ansprüche, insbesondere nach Anspruch 13, zum Einsatz in einer schlitzförmigen, sich in Schlitzlängsrichtung wenigstens einseitig über die Verbindungsstelle hinaus erstreckenden Bauelementausnehmung, vorzugsweise in einem stirnseitig offenen Durchgangsschlitz, dadurch gekennzeichnet, dass an wenigstens einer Schlitzseitenfläche mindestens eine sich in Schlitzlängsrichtung erstreckende Hinterschneidung (HSb, HSc) gebildet ist und dass mindestens ein in die schlitzförmige Bauelementausnehmung (ANb), vorzugsweise durch Einschieben in Schlitzlängsrichtung, einsetzbares Verbindungselement (VRf, VRg) mit mindestens einem in eine Längshinterschneidung (HSb, HSc) eingreifenden Ankerelement (AKc, AKd) vorgesehen ist.

16. Verbindungsvorrichtung nach Anspruch 15, zum Einsatz in einer schlitzförmigen Bauelementausnehmung mit wenigstens einem Paar von in den einander gegenüberliegenden Schlitzseitenflächen gebildeten Längshinterschneidungen, dadurch gekennzeichnet, dass jeweils für eine Verbindungsstelle mindestens ein Paar von Verbindungselementen (VRg1, VRg2) mit bezüglich der Schlitz-Längsmittelebene wenigstens teilweise symmetrisch ausgebildeten, in die Längshinterschneidungen eingreifenden Ankerelementen (AKd) vorgesehen ist.

17. Verbindungsvorrichtung nach Anspruch 15 oder 16, dadurch gekennzeichnet, dass jeweils für eine Verbindungsstelle mindestens zwei voneinander getrennte, mit gegenseitigem Abstand in Schlitzlängsrichtung in die schlitzförmige Bauelementausnehmung einsetzbare Verbindungselemente (VRg3, VRg4) vorgesehen sind.

18. Vorrichtung zum lösbaren Verbinden von Bauelementen, insbesondere aus Holz oder Kunststoff, mit mindestens einem in einer abgedeckten Lage, insbesondere innerhalb einer Ausnehmung, angeordneten Rastfederelemente, insbesondere nach einem der vorangehenden Ansprüche, dadurch gekennzeichnet, dass innerhalb der Abdeckung (AD) bzw. innerhalb eines in die Ausnehmung (AN) eingesetzten Konstruktionselementes, insbesondere eines Verbindungselementes (ZGb), ein Durchlass (B, Ba, Bb) für das Einführen eines Werkzeugs (W, Wa, Wb) zum Verstellen, insbesondere zum Lösen, der Rastverbindung vorgesehen ist.

19. Anwendung eines Hilfswerkzeuges für Lösung von einer Feder-Rastverbindung nach einem der vorangehenden Ansprüche mit wenigstens einem Rastfederelement, das in einer Ausnehmung eines Bauteils angeordnet und von einer Oeffnung dieser Ausnehmung aus zum Lösen der Rastverbindung zugänglich ist, wobei ein an einem Griffabschnitt (GR) des Hilfswerkzeuges anschliessender Gabelabschnitt (GA) mit abgewinkelt oder gekrümmt sowie zueinander parallel verlaufenden Schenkelteilen vorgesehen ist.

## Claims

1. Device for disengageably connecting construction elements, a single connection of such construction element (BE) comprising a first connecting element (VRa - VRf) to be inserted in a cavity (AN) of said construction element for establishing a reliable positive connection therewith, and further comprising a second connecting element (ZGa - ZGc) to be inserted in said cavity (AN) in operational connection with said first connecting element, on the first connecting element there being provided at least one anchoring element (AK), which comes in positive connection with an undercut (HS) of said construction element, and a supporting member (STG) is provided on said second connecting element for securing the anchoring element (AK) in its positive connection with said construction element (BE), characterized in that a self-locking and disengageable locking spring connection (BRF) is provided between both said connecting elements (VRa - VRf; ZGa - ZGc).

2. Connecting device according to claim 1, characterized in that at least one preformed undercut (HS, HSa) for being engaged by at least one anchoring element (AK, AKa) of said first connecting element is provided within said construction element cavity (AN).

3. Connecting device according to claim 1 or 2, characterized by at least one anchoring element (AK, AKa) arranged movably in relation to at least part of the corresponding connecting element (VRa - VRg) in the sense of a locking movement into a corresponding undercut (HS) of a construction element (BE), said anchoring element being connected with the corresponding connecting element by at least one plastically or preferably elastically deformable transition element (UE).

4. Connecting device according to claim 3, characterized in that said anchoring element (AK, AKa) is arranged on a transition element (UE) of the corresponding connecting element, said transition element being spring-elastically deformable by bending and/or torsion, and said anchoring element further being arranged so as to stand under a spring pretension acting in a locking or engaging direction with regard to said undercut (HS).

5. Connecting device according to anyone of the preceding claims, characterized by at least one bow- or fork-like first connecting element (VRa - VRe) having at least one branch being plastically or preferably elastical deformable at least partially, said branch being provided with or forming at least one anchoring element (AK, AKa) for engaging or locking into the corresponding undercut on the side of the corresponding construction element (BE).

6. Connecting device according to claim 5, characterized in that said bow- or fork-like first connecting element (VRa - VRe) is designed for being inserted in a slot-like construction element cavity (AN), and is provided at least in the region of the outer edge of at least one of the bow or fork branches, with at least one anchoring element (AK, AKa).

7. Device for preferably disengageably connecting construction elements, particularly of wood or plastics, comprising at least one pair of complementary connecting elements, which are positively coherent in a locking position and each connected positively with regard to a tension axis extending through these construction elements on their part with at least one of said construction elements to be connected, particularly according to anyone of the preceding claims, characterized in that a first connecting element (VRb) comprises at least one bending spring locking element (BRF) for establishing a positive connection with a complementary second connecting element (ZGa) when being in a locking position, and in that said bending spring locking element (BRF) in its undeformed condition has a shape curved at least by sections with at least approximatively constant radii, preferably a shape curved by sections in opposite sense.

8. Device for preferably disengageably connecting construction elements, particularly of wood or plastics, comprising at least one pair of complementary connection elements, which are positively coherent in a locking position and each connected positively with regard to a tension axis extending through these construction elements on their part with at least one of said construction elements to be connected, particularly according to anyone of the preceding claims, characterized in that a first connecting element (VRb) comprises at least one torsion spring locking element (TRF) for establishing a positive connection with a complementary second connecting element (ZGa) when being in a locking position.

9. Connecting device according to claim 8, characterized in that the torsion spring locking element (TRF) is shaped as a longitudinally extending flat spring element having at least one lateral locking projection (RVS), in its undeformed condition said torsion spring element having a torsion angle difference (c) between the flat cross-section in the range of said locking projection (RVS) on one side and a fixation cross-section located offset thereagainst on the other side.

10. Connecting device according to claim 9, characterized in that the torsion spring locking element (TRF) in its undeformed condition presents a first longitudinal edge (LKa) extending at least approximatively in a plane (E), and that the second longitudinal edge (LKb), which forms said lateral locking projection (RVS), extends risingly out of the plane of said first longitudinal edge (LKa) in the direction from the fixation cross-section to said locking projection, and farther from said locking projection (RVS) back again at least approximately into the range of said plane of the first longitudinal edge (LKa).

11. Device for preferably disengageably connecting construction elements, particularly of wood or plastics, comprising at least one pair of complementary connecting elements, which are positively coherent in a locking position and connected positively with regard to a tension axis extending through these construction elements on their part with at least one of said construction elements to be connected, particularly according to anyone of the preceding claims, characterized in that an abutment element (AL) is provided on at least one of said connecting elements (VRb) for securing the position of the other connecting element, preferably with regard to the direction of said tension axis (XX).

12. Device for preferably disengageably connecting construction elements, particularly of wood or plastics, comprising at least one pair of complementary connecting elements, which are positively coherent in an active position and each connected on their part with at least one of said construction elements to be connected, particularly according to anyone of the preceding claims, characterized in that one of said connecting elements is rotatably mounted on the other connecting element and secured in its position with regard to a direction transverse to its axis of rotation by means of a holding member, preferably by means of at least one holding foil.

13. Device for preferably disengageably connecting construction elements, particularly of wood or plastics, comprising at least one pair of complementary connecting elements, which are positively coherent in a locking position and each connected on their part by means of a locking device with at least one of said construction elements to be connected, at least one of said connecting elements being inserted in a longitudinally extending, preferably slot-like cavity of one of said construction elements, particularly according to anyone of the preceding claims, preferably according to claim 12, characterized in that the locking device (RV) comprises at least one locking member (RG) acting as a spring at least approximatelyin direction parallel to the longitudinal direction (YY) of said cavity, and in that a positive holding abutment (HAL) for a positive element (FEL) on the locking member (RG) is formed on an edge or corner of the complementary connecting element, which edge or corner is projecting in the longitudinal direction (YY) of said cavity.

14. Connecting device according to anyone of the preceding claims, particularly according to claim 13, characterized in that at least one of the cooperating connecting elements, preferably a connecting element inserted in a cavity (AN) of a construction element, is connected with said construction element by material bonding, particularly by adhesive.

15. Connecting device according to anyone of the preceding claims, particularly according to claim 13, for being inserted in a slot-like construction element cavity, which extends on at least one side in the longitudinal direction of the slot beyond the connection location, preferably for being inserted in a passage slot being open at its end, characterized in that at least one undercut (HSb, HSc) extending in the longitudinal direction of the slot is formed in at least one lateral slot surface, and in that at least one connection element (VRf, VRg) is provided, which adapted for insertion in said slot-like construction element cavity (ANb), preferably by shifting in the longitudinal direction of the slot, and which has at least one anchoring element (AKc, AKd) engaging in a longitudinal undercut (HSb, HSc).

16. Connecting device according to claim 15, for being inserted in a slot-like construction element cavity having at least one pair of longitudinal undercuts formed in opposite lateral slot surfaces, characterized in that for one connection location there is provided at least one pair of connecting elements (VRg1, VRg2) comprising anchoring elements (AKd), which are formed at least partially symmetric in relation to the longitudinal middle plane of the slot and engage in said longitudinal undercuts.

17. Connecting device according to claim 15 or 16, characterized in that for one connection location at least two connecting elements (VRg3, VRg4) are provided, which are separate from each other and to be inserted with mutual distance with regard to the longitudinal direction of the slot in said slot-like construction element cavity.

18. Device for disengageably connecting construction elements, particularly of wood or plastics, comprising at least one locking spring element arranged in a covered position, particularly within a cavity, particularly according to anyone of the preceding claims, characterized in that a passage (B, Ba, Bb) is arranged within the coverage (AD) or within a constructional element inserted in a cavity (AN), the passage being provided for introducing a tool (W, Wa, Wb) for adjusting, particularly for disengaging the locking connection.

19. Application of an auxiliary tool for disengaging a locking spring connection according to anyone of the preceding claims comprising at least one locking spring element arranged in a cavity of a construction element and being accessible from an opening of said cavity for disengaging the locking connection, there being provided a fork section (GA) associated with a handling section (GR) of the auxiliary tool and comprising branch sections extending angularly or curved and in parallel to each other.

**Revendications**

1. Dispositif pour le raccordement déclenchable d'éléments de construction, dans lequel sont prévus un premier élément de raccordement (VRa - VRf) à insérer dans un évidement (AN) de l'élément de construction (BE) à chacun des endroits de jonction en formant une liaison positive avec l'élément de construction et un deuxième élément de raccordement (ZGa - ZGc) insérable dans l'évidement (AN), et dans lequel est prévu au premier élément de raccordement au moins un élément d'ancrage (AK) qui constitue une liaison positive avec une échancrure de l'élément de construction et dans lequel est prévu sur le deuxième élément de raccordement au moins un organe d'appui (STG), pour la sécurité de l'élément d'ancrage (AK) dans sa liaison positive avec l'élément de construction (BE), caractérisé par le fait qu'entre les deux éléments de raccordement (VRa - VRf; ZGa - ZGc) se trouve une liaison d'engrènement à ressort (BRF) autobloquante et déclenchable.

2. Dispositif de raccordement selon la revendication 1, caractérisé par le fait qu'au moins une échancrure (HS, HSa) préfaçonnée est prévue à l'intérieur de l'évidement (AN) de l'élément de construction pour l'engrènement d'au moins un élément d'ancrage (AK, AKa) du premier élément de raccordement.

3. Dispositif de raccordement selon la revendication 1 ou 2, caractérisé par au moins un élément d'ancrage (AK, AKa) qui est disposé de façon mobile relativement au moins à une partie de l'élément de raccordement correspondant (VRa - VRg) dans le sens d'un mouvement d'engrènement dans une échancrure (HS) correspondante d'un élément de construction (BE) et qui est relié à l'élément de raccordement correspondant par au moins un élément de transition (UE) déformable plastiquement ou, de préférence, élastiquement.

4. Dispositif de raccordement selon la revendication 3, caractérisé par le fait que l'élément d'ancrage (AK, AKa) est disposé à un élément de transition (UE) de l'élément de raccordement correspondant, ledit élément de transition étant déformable élastiquement comme un ressort par la flexion et/ou par la torsion, et ledit élément d'ancrage se trouvant sour une prétension à ressort agissant dans le sens de l'engrènement resp. de la pénétration par rapport à l'échancrure (HS) correspondante.

5. Dispositif de raccordement selon quelconque des revendications précédentes, caractérisé par au moins un premier élément de raccordement (VRa - VRe) en forme d'étrier ou de fourche avec au moins une branche d'étrier ou de fourche étant déformable plastiquement ou élastiquement, en particulier élastiquement comme un ressort, au moins partiellement, ladite branche étant pourvue au moins d'un élément d'ancrage (AK, AKa) pour l'engrènement ou la pénétration dans l'échancrure correspondante sur le côté de l'élément de construction (BE) correspondant, ou constituant un tel élément d'ancrage.

6. Dispositif de raccordement selon la revendication 5, caractérisé par le fait que le premier élément de raccordement (VRa - vRe), en forme d'étrier ou de fourche, est constitué de façon à engrener dans un évidement (AN) en forme d'une fente de l'élément de construction, et ledit premier élément de raccordement étant muni, au moins dans la zone de l'arête extérieure, d'au moins l'une des branches de l'étrier ou de la fourche, au moins d'un élément d'ancrage (AK, AKa).

7. Dispositif pour le raccordement, de préférence déclenchable, d'éléments de construction, en particulier en bois ou en matière plastique, ayant au moins une paire d'éléments de raccordement complémentaires cohérents positivement en une position d'engrènement, qui sont chacun reliés positivement, a leur tour, au moins à l'un des éléments de construction à raccorder dans le sens d'au moins l'un des axes de traction passant par ces éléments de construction, en particulier selon quelconque des revendications précédentes, caractérisé par un premier élément de raccordement (VRb) qui présente au moins un élément d'engrènement par flexion à ressort (BRF) pour former une liaison positive avec un deuxième élément de raccordement (ZGa) complémentaire dans la position d'engrènement, et caractérisé par le fait que l'élément d'engrènement par flexion à ressort (BRF) présente, à l'état initial non déformé, une forme cintrée ayant, au moins par sections, un rayon au moins approximativement constant, de préférence une forme cintrée à contresens par sections.

8. Dispositif pour le raccordement, de préférence déclenchable, d'éléments de construction, en particulier en bois ou en matière plastique, ayant au moins une paire d'éléments de raccordement complémentaires cohérents positivement en une position d'engrènement, qui sont chacun reliés positivement, à leur tour, au moins à l'un des éléments de construction à raccorder dans le sens d'au moins l'un des axes de traction passant par ces éléments de construction, en particulier selon quelconque des revendications précédentes, caractérisé par le fait qu'un premier élément de raccordement (VRb) présente au moins un élément d'engrènement par torsion à ressort (TRF) pour constituer une liaison positive avec un deuxième élément de raccordement (ZGa) en position d'engrènement.

9. Dispositif de raccordement selon la revendication 8, caractérisé par le fait que l'élément d'engrènement par torsion à ressort (TRF) est façonné comme élément de ressort plat étiré longitudinalement avec au moins une saillie latérale d'engrènement (RVS), et présente, à l'état non déformé, une différence (c) préfixée d'angle de torsion entre la section plane dans zone de la saillie latérale d'engrènement (RVS) d'une part et une section de fixation déplacée contre celle-ci en direction longitudinale du ressort d'autre part.

10. Dispositif de raccordement selon la revendication 9, caractérisé par le fait que l'élément d'engrènement par torsion à ressort (TRF), à l'état non déformé, présente une première arête longitudinale (LKa) se trouvant au moins approximativement dans un plan (E) et que la deuxième arête longitudinale (LKb) constituant la saillie latérale d'engrènement (RVS) présente une marche s'élevant du plan de la première arête longitudinale (LKa) en direction de la section de fixation vers la saillie d'engrènement et retombant, à la suite de la saillie d'engrènement (RVS), à nouveau au moins approximativement dans la zone du plan de la première arête longitudinale (LKa).

11. Dispositif pour le raccordement, de préférence déclenchable, d'éléments de construction, en particulier en bois ou en matière plastique, ayant au moins une paire d'éléments de raccordement complémentaires cohérents positivement en une position d'engrènement, qui sont chacun reliés positivement, à leur tour, au moins à l'un des éléments de construction à raccorder dans le sens d'au moins l'un des axes de traction passant par ces éléments de construction, en particulier selon quelconque des revendications précédentes, caractérisé par le fait qu'un élément de butée (AL) est prévu au moins à l'un des éléments de raccordement (VRb) pour assurer la position de l'autre élément de raccordement (ZGa), de préférence en direction de l'axe de traction (XX).

12. Dispositif pour le raccordement, de préférence déclenchable, d'éléments de construction, en particulier en bois ou en matière plastique, ayant au moins une paire d'éléments de raccordement complémentaires cohérents positivement en une position active, qui sont chacun reliés positivement, à leur tour, au moins à l'un des éléments de construction à raccorder, en particulier selon quelconque des revendications précédentes, caractérisé par le fait que l'un des éléments de raccordement est fixé à l'autre élément de raccordement de façon rotative et que sa position est assurée par au moins un organe de maintien, de préférence par une feuille de maintien déformable dans le sens transversal par rapport à son axe de rotation.

13. Dispositif pour le raccordement, de préférence déclenchable, d'éléments de construction, en particulier en bois ou en matière plastique, ayant au moins une paire d'éléments de raccordement complémentaires cohérents positivement en une position d'engrènement, qui sont chacun reliés positivement, à leur tour, au moins à l'un des éléments de construction à raccorder par une liaison d'engrènement, au moins l'un des éléments de raccordement étant inséré dans un évidement en forme de fente de l'un des éléments de construction, en particulier selon quelconque des revendications précédentes, de préférence selon la revendication 12, caractérisé par le fait que le dispositif d'engrènement (RV) présente au moins un organe d'engrènement (RG) à ressort au moins approximativement en direction parallèle au sens longitudinal (YY) de l'évidement, que l'élément complémentaire de raccordement présente une arête ou un coin faisant saillie dans le sens longitudinal (YY) de l'évidement, et que ladite arête ou ledit coin présente une face d'attouchement (HAL) pour un élément d'engrènement positif.

14. Dispositif de raccordement selon quelconque des revendications précédentes, en particulier selon la revendication 13, caractérisé par le fait qu'au moins l'un des éléments de raccordement coopérant, de préférence un élément de raccordement inséré dans un évidement (AN) d'un élément de construction, est relié avec celui-ci par une liaison de matière, en particulier par collage.

15. Dispositif de raccordement selon quelconque des revendications précédentes, en particulier selon la revendication 13, pour être inséré dans un évidement de l'élément de construction en forme de fente, s'étendant au moins d'un côté dans le sens longitudinal de la fente par-dessus l'endroit de raccordement, de préférence dans une fente de passage ouverte au bout, caractérisé par le fait qu'au moins l'une des surfaces latérales de la fente présente au moins une échancrure (HSb, HSc) s'étendant en direction de la fente, et que le dispositif présente au moins un élément de raccordement (VRf, VRg), qui soit inséré dans l'évidement en forme de fente (ANb), de préférence par introduction dans le sens longitudinal de la fente, et qui présente au moins un élément d'ancrage (AKc, AKd) s'engrenant dans une échancrure longitudinale (HSb, HSc).

16. Dispositif de raccordement selon la revendication 15, pour être inséré dans un évidement de l'élément de construction, qui présente une forme de fente et au moins une paire d'échancrures longitudinales constituées dans les faces latérales opposées de la fente, caractérisé par le fait que, pour un endroit de raccordement, il est prévu au moins une paire d'éléments de raccordement (VRg1, VRg2) avec des éléments d'ancrage (AKd) disposés au moins partiellement de façon symétrique par rapport au plan longitudinal moyen de la fente et s'engrenant dans les échancrures longitudinales.

17. Dispositif de raccordement selon la revendication 15 ou 16, caractérisé par le fait que, pour chacun des endroits de raccordement, sont prévus au moins deux éléments de raccordement (VRg3, VRg4) séparés l'un de l'autre, pour être insérés dans l'évidement en fente de l'éléments de construction avec espace réciproque.

18. Dispositif pour le raccordement, de préférence déclenchable, d'éléments de construction, en particulier en bois ou en matière plastique, ayant au moins un élément d'engrènement à ressort disposé en une position découverte, en particulier à l'intérieur d'un évidement, en particulier selon quelconque des revendications précédentes, caractérisé par le fait qu'à l'intérieur du recouvrement (AD) resp. à l'intérieur d'un organe de construction inséré dans un évidement, en particulier d'un élément de raccordement (ZGb), est prévu un passage (B, Ba, Bb) pour l'introduction d'un outil (W, Wa, Wb) dans le but de déplacer et particulièrement de démonter la raccordement à engrènement.

19. Utilisation d'un outillage auxiliaire pour le démontage d'un raccordement à engrènement par ressort, selon l'une des revendications précédentes, ayant au moins un élément d'engrènement à ressort disposé dans un évidement d'un élément de construction et étant accessible par une ouverture dudit évidement pour permettre de déclencher ledit raccordement à engrènement par ressort, une zone à fourche (GA) contiguë à une zone de poignée de l'outil auxiliaire (GR) étant prévue avec des parties de branches angulaires ou cintrées et se déplaçant parallèlement l'une par rapport à l'autre.

Fig.1

Fig.2

Fig.3

Fig.4

Fig.5

Fig.6

Fig.7

Fig.8

Fig.9

Fig.10

Fig.11

Fig.12

Fig.13

Fig. 14

Fig. 15

Fig. 16

Fig. 17

Fig. 18